# DEMANDE DE BREVET EUROPEEN

(11) **EP 1 122 855 A1**
(43) Date de publication de la demande: **08.08.2001**
(21) Numéro de dépôt: 01400137.4
(22) Date de dépôt: 18.01.2001
(51) Int. Cl.: H02J 7/00, H02H 7/18

(54) **Bloc batterie Li-Ion pouvant être chargé par un chargeur alcalin**

(30) Priorité: 03.02.2000 FR 0001349
(71) Demandeur: ALCATEL, 75008 Paris (FR)
(72) Inventeur: Maloizel, Serge, 16730 Trois Palis (FR); Jaud, Stéphane, 16710 Saint Yrieix sur Charente (FR); Boisumault, Philippe, 16170 Saint Cybardeaux (FR)
(74) Mandataire: Laroche, Danièle

(57) **Abrégé**

Le bloc batterie comporte au moins un accumulateur (5), deux plots externes de connexion dont l'un est positif (2) et l'autre négatif (3) et un circuit de sécurité (4) connecté pour interdire l'entrée de tout courant de charge dans l'accumulateur (5) dès qu'une tension appliquée entre lesdits plots externes de connexion est supérieure à une certaine tension maximale de sécurité. Un circuit additionnel de protection (1) est en outre connecté entre les plots externes (2,3) et le circuit de sécurité (4) pour interdire l'entrée de tout courant de charge dans ledit circuit de sécurité (4) dès que la tension appliquée entre lesdits plots externes de connexion est supérieure à une certaine tension maximale de charge, cette tension maximale de charge étant inférieure à la tension maximale de sécurité. Cette construction évite de faire fonctionner de façon intempestive le circuit de sécurité.

## Description

L'invention concerne un bloc batterie comportant au moins un accumulateur, deux plots externes de connexion dont l'un est positif et l'autre négatif et un circuit de sécurité connecté pour interdire l'entrée de tout courant de charge dans l'accumulateur dès qu'une tension appliquée entre lesdits plots externes est supérieure à une certaine tension maximale de sécurité.

Un tel bloc batterie est plus particulièrement destiné à alimenter des appareils portatifs tels que des téléphones mobiles, des caméscopes, ou autres. Le circuit de sécurité d'un tel bloc batterie est prévu pour protéger chaque accumulateur contre une éventuelle défaillance du chargeur amenant par exemple une surtension entre les plots externes de connexion du bloc batterie. Un tel circuit de sécurité est connu du document de brevet européen EP-525 744 B1. Son rôle est donc d'éviter les décharges profondes et les surcharges de chaque accumulateur du bloc batterie de façon à éviter par exemple qu'un court-circuit au niveau des plots externes de connexion ne provoque la destruction de l'accumulateur. Il est principalement constitué de plusieurs circuits de détection de surcharge excessive et de décharge excessive, de plusieurs circuits de décharge et de plusieurs circuits de commutation associés respectivement aux accumulateurs du bloc batterie. Chaque accumulateur du bloc batterie est donc connecté à un circuit de détection de surcharge et de décharge profonde, à un circuit de décharge et à un circuit de commutation. De cette façon le circuit de sécurité connu du document indiqué ci-dessus est capable, pour chaque accumulateur d'un bloc batterie, de provoquer une décharge de l'accumulateur dans le cas où il détecte que celui-ci a une tension excessive à ses bornes, ou bien d'interdire qu'un courant ne sorte d'un accumulateur, dans le cas où il a été détecté que cet accumulateur est en décharge profonde.

Parmi les blocs batterie, ceux qui comportent des accumulateurs de type Li-Ion présentent un intérêt significatif en termes de densité d'énergie contenue et de gain de poids mais ces accumulateurs ne supportent pas de surtension à leurs bornes. L'addition d'un circuit de sécurité comme indiqué plus haut dans un bloc batterie à accumulateurs Li-lon contribue à renforcer la performance et la fiabilité de ce bloc batterie.

Du point de vue de la charge, les différents types d'accumulateurs ont des besoins différents, si bien qu'à ce jour, les chargeurs utilisés doivent être adaptés au type d'accumulateurs qu'ils sont censés charger. Un chargeur pour bloc batterie alcaline, par exemple. module sa tension de sortie de manière à générer un courant de charge constant dans le bloc batterie qu'il charge. alors qu'un chargeur pour bloc batterie Li-Ion maintient aux plots externes de connexion du bloc batterie qu'il charge une tension constante.

Si l'on charge un bloc batterie Li-lon avec un chargeur alcalin, au fur et à mesure que l'on approche de la fin de la charge, la résistance des accumulateurs Li-lon devient plus importante, et donc, le chargeur augmente la tension qu'il applique de manière à maintenir un courant constant. jusqu'à ce que la tension appliquée soit supérieure à la tension maximale de sécurité du bloc-batterie Li-Ion, après quoi le circuit de sécurité du bloc batterie Li-lon va s'ouvrir, de manière à isoler les accumulateurs du chargeur, ce qui correspond à la fin de la charge.

Si l'on considère un utilisateur qui possède un chargeur alcalin, avec lequel il va régulièrement recharger un bloc batterie Li-lon, cela signifie que le circuit de sécurité, dont le rôle est de n'intervenir qu'en dernière extrémité, va être sollicité au cours de chaque charge. Ce mode d'utilisation est en soi préjudiciable à la fiabilité du bloc batterie : le fait que le circuit de sécurité soit régulièrement sollicité réduit sa fiabilité, et par suite, la fiabilité et la sécurisation du bloc batterie sont elles aussi réduites.

Ce genre de situation se produit fréquemment : en batterie vidéo professionnelle, par exemple, les interfaces entre le bloc batterie et la caméra sont figées, si bien qu'un bloc batterie Li-lon a la même interface qu'un bloc batterie alcalin. De fait, un utilisateur pourra toujours connecter un bloc batterie Li-lon sur un chargeur alcalin, ce qui présente l'inconvénient de faire fonctionner régulièrement le bloc batterie sur un mode sécurité.

Le but de l'invention est de remédier à ces inconvénients.

A cet effet, l'invention a pour objet un bloc batterie comportant au moins un accumulateur, deux plots externes de connexion dont l'un est positif et l'autre négatif, et un circuit de sécurité connecté pour interdire l'entrée de tout courant de charge dans l'accumulateur dès qu'une tension appliquée entre lesdits plots externes de connexion est supérieure à une certaine tension maximale de sécurité, caractérisé en ce qu'un circuit additionnel de protection est connecté entre les plots externes et le circuit de sécurité pour interdire l'entrée de tout courant de charge dans ledit circuit de sécurité dès que la tension appliquée entre lesdits plots externes est supérieure à une certaine tension maximale de charge, cette tension maximale de charge étant inférieure à la tension maximale de sécurité.

Avec cet agencement, le circuit de sécurité d'un bloc batterie Li-lon n'est plus sollicité à chaque fois que le bloc batterie est chargé par un chargeur alcalin ce qui contribue à maintenir la fiabilité du bloc batterie à un niveau satisfaisant qu'il soit utilisé avec un chargeur alcalin ou avec un chargeur Li-lon.

Selon un mode particulier de réalisation du bloc batterie selon l'invention. le circuit additionnel de protection comporte un interrupteur transistor de type MOSFET qui est commandé pour interdire ou autoriser l'entrée d'un courant de charge dans le circuit de sécurité. Dans la suite, on dira que le circuit de protection est fermé ou ouvert suivant que ce transistor de type MOFSET est fermé ou ouvert. Un problème qui est couramment rencontré dans les commutations commandées est l'oscillation du circuit : par suite des légères perturbations de tension que provoque l'ouverture du circuit, le circuit de protection se trouve dans une configuration où il doit se fermer à nouveau. Si l'on n'a pas pris de précautions à cet effet, le circuit se met à osciller indéfiniment au moment où il devrait simplement s'ouvrir. Selon un mode de réalisation particulier du circuit de protection selon l'invention, l'interrupteur de type transistor MOFSET est commandé par un comparateur ayant une première entrée qui recoit ladite tension maximale de charge et une seconde entrée qui reçoit ladite tension appliquée aux plots externes de connexion, cette seconde entrée étant connectée aux plots externes de connexion par l'intermédiaire d'un pont diviseur ayant un taux de division qui varie pour provoquer un hystérisis sur la commande de l'interrupteur. L'hystérisis est donc provoqué entre l'ouverture et la fermeture de l'interrupteur ce qui contribue à éliminer les problèmes d'oscillation de la commande. La tension de fermeture du circuit est prévue pour être inférieure à la tension maximale de charge (au dessus de laquelle le circuit est ouvert). De cette façon, lorsque le circuit s'ouvre, la tension d'entrée peut diminuer dans une certaine mesure (rester supérieure à la tension de fermeture) sans provoquer la fermeture du circuit. Le circuit ainsi obtenu est stable et n'est pas perturbé par les variations de tension que provoque son fonctionnement.

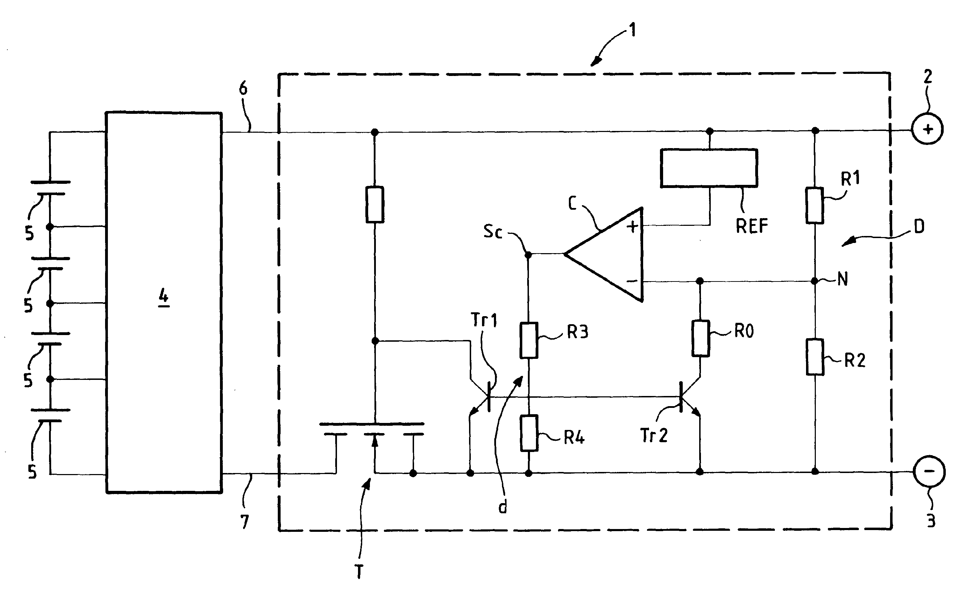

Un exemple de réalisation du bloc batterie selon l'invention est décrit plus en détail ci-après et illustré sur la figure unique. passant, le pont diviseur est composé des résistances R1 et R0 en parallèle avec R2 ; si Tr2 est ouvert, le pont diviseur est composé seulement des résistances R1 et R2. Le taux de division du pont D est donc différent suivant que la tension appliquée par la sortie Sc du comparateur maintient le transistor Tr2 passant ou ouvert. De cette façon. le comparateur effectue une lecture surévaluée de la tension entre les deux plots du bloc batterie lorsque le circuit de protection est ouvert. Pour que le circuit de protection se referme, il faut donc que la tension réelle entre les deux plots de connexion baisse de façon suffisante pour être en deçà de la tension de fermeture ce qui correspond au phénomène d'hystérésis entre l'ouverture et la fermeture du circuit de protection.

## Revendications

1. Un bloc batterie comportant au moins un accumulateur (5), deux plots externes de connexion dont l'un est positif (2) et l'autre négatif (3) et un circuit de sécurité (4) connecté pour interdire l'entrée de tout courant de charge dans l'accumulateur (5) dès qu'une tension appliquée entre lesdits plots externes de connexion est supérieure à une certaine tension maximale de sécurité, caractérisé en ce qu'un circuit additionnel de protection (1) est connecté entre les plots externes (2,3) et le circuit de sécurité (4) pour interdire l'entrée de tout courant de charge dans ledit circuit de sécurité (4) dès que la tension appliquée entre lesdits plots externes de connexion est supérieure à une certaine tension maximale de charge, cette tension maximale de charge étant inférieure à la tension maximale de sécurité.

2. Un bloc batterie selon la revendication 1, dans lequel le circuit additionnel de protection (1) comporte un interrupteur (T) transistor de type MOFSET qui est commandé pour interdir ou autoriser l'entrée d'un courant de charge dans le circuit de sécurité (4).

3. Un bloc batterie selon la revendication 2, dans lequel ledit interrupteur (T) est commandé par un comparateur (C ) ayant une première entrée qui reçoit ladite tension maximale de charge et une seconde entrée qui reçoit ladite tension appliquée aux plots externes de connexion, cette seconde entrée étant connectée aux plots externes (2,3) de connexion par l'intermédiaire d'un pont diviseur (D) ayant un taux de division qui varie pour provoquer un hystérisis sur la commande de l'interrupteur.
